# EUROPEAN PATENT APPLICATION

(11) **EP 2 574 029 A1**
(43) Date of publication of application: **27.03.2013**
(21) Application number: 11783334.3
(22) Date of filing: 31.03.2011
(51) Int. Cl.: H04M 11/00, G06F 13/00, H04M 1/00

(54) **OBJECT DISTRIBUTION RANGE SETTING DEVICE AND OBJECT DISTRIBUTION RANGE SETTING METHOD**

(30) Priority: 21.05.2010 JP 2010117341
(71) Applicant: NTT DOCOMO, INC., Chiyoda-ku Tokyo 100-6150 (JP)
(72) Inventor: MORINAGA Yasuo, Tokyo 100-6150 (JP); OTA Manabu, Tokyo 100-6150 (JP)
(74) Representative: Viering, Jentschura & Partner
(86) International application number: PCT/JP2011/058207
(87) International publication number: WO 2011/145397

(57) **Abstract**

An object management device includes a distribution range setting unit that sets a range where an object is visible as a distribution range of object information related to the object for each of the object information based on a located position of the object and map information. Consequently, when the mobile terminal is located in the position where the object is visible, the object information of the object is distributed to the mobile terminal. It is thereby possible to appropriately distribute object information to be distributed so as to appropriately display the object on the mobile terminal.

## Description

### Technical Field

The present invention relates to an object distribution range setting device and an object distribution range setting method.

### Background Art

In recent years, a service using AR (Augmented Reality) technology has been developed and provided. For example, a technique that provides an object placed in the vicinity of the located position of a mobile terminal in the real space from a server to the mobile terminal and displays an object including various information and images superimposed on an image acquired by a camera included in the mobile terminal is known. Further, a technique that provides contents related to a shop within a specified range from the current position of a mobile terminal to the mobile terminal is known (for example, see Patent Literature 1).

### Citation List

### Patent Literature

PTL 1: Japanese Unexamined Patent Application Publication No. 2002-48564

### Summary of Invention

### Technical Problem

However, in the related art, because information of an object located within a specified distance from the position of the mobile terminal is distributed to the mobile terminal with no consideration of an accurate positional relationship between the mobile terminal and the object, there is a case where information of an object that is invisible from the position of the mobile terminal is distributed to the mobile terminal. In other words, in the related art, there is a case where information of an unnecessary object is distributed to the mobile terminal. Further, it is preferred that information of an object that is located in a place visible from the mobile terminal is distributed to the mobile terminal even when it is distant from the mobile terminal.

The present invention has been accomplished to solve the above problems and an object of the present invention is thus to provide an object distribution range setting device and an object distribution range setting method that can appropriately distribute object information to be distributed so as to appropriately display an object on the mobile terminal in the AR technology.

### Solution to Problem

To solve the above problem, an object distribution range setting device according to the present invention is an object distribution range setting device for setting a distribution range in object information to be distributed to a mobile terminal when a position of the mobile terminal corresponds to the distribution range, including an object information storage means for storing the object information containing information about a located position of an object, a map information storage means for storing map information containing information about a position and shape of a shield blocking a line of sight in a real space, an object information acquisition means for acquiring the object information from the object information storage means, a map information acquisition means for acquiring the map information from the map information storage means, and a distribution range setting means for setting a range where the object is visible as the distribution range for each of the object information based on the located position of the object indicated by the object information acquired by the object information acquisition means and the map information acquired by the map information acquisition means.

To solve the above problem, an object distribution range setting method according to the present invention is an object distribution range setting method in an object distribution range setting device for setting a distribution range in object information to be distributed to a mobile terminal when a position of the mobile terminal corresponds to the distribution range, the method including an object information acquisition step of acquiring the object information from an object information storage means storing the object information containing information about a located position of an object, a map information acquisition step of acquiring the map information from a map information storage means storing map information containing information about a position and shape of a shield blocking a line of sight in a real space, and a distribution range setting step of setting a range where the object is visible as the distribution range for each of the object information based on the located position of the object indicated by the object information acquired in the object information acquisition step and the map information acquired in the map information acquisition step.

In the object distribution range setting device and the object distribution range setting method according to the present invention, a range where an object is visible is set for each object information as a distribution range of object information related to the object based on the located position of the object and the map information. Consequently, when the mobile terminal is located in the position where an object is visible, the object information of the object is distributed to the mobile terminal. It is thereby possible to appropriately distribute object information to be distributed so as to appropriately display the object on the mobile terminal.

Further, in the object distribution range setting device, the distribution range setting means virtually generates a plurality of line segments having a specified length with the located position of the object as an endpoint in a real space defined based on the map information and, when the line segment intersects with the shield in a position within the specified length from the located position of the object, sets an intersection between the line segment and the shield as a correction point and, when the line segment does not intersect with the shield, sets another endpoint of the line segment as a correction point, and then sets a region defined by a line connecting a plurality of correction points respectively set for the plurality of line segments as the distribution range.

In this configuration, a line segment with a specified length having an endpoint at the located position of an object is set, and an intersection between the line segment and a shield or another endpoint of the line segment is set as a correction point for setting the outer edge of a distribution range, and a region defined by a line connecting a plurality of correction points is set as the distribution range. The extending direction of the line segment corresponds to the visual line direction when viewing the object from the mobile terminal. Further, the length of the line segment corresponds to the marginal distance at which the object is visible. The range where the object is visible is thereby appropriately defined by the correction points. Further, because the range where the object is visible is set as the distribution range, the object information to be distributed is appropriately distributed to the mobile terminal.

Further, in the object distribution range setting device, the map information storage means stores a transparency attribute in association with the shield when the shield is a transparent object, and even if the line segment intersects with the shield, when the transparency attribute is associated with the shield, the distribution range setting means sets the correction point assuming that the shield does not exist.

Even if a shield exists on the light of sight, when the shield is transparent, an object existing in a position that is hidden behind the shield when viewed from the mobile terminal is visible. According to the configuration of the present invention, when a transparency attribute is given to a shield, a correction point is set assuming that the shield does not exist. Accordingly, when the mobile terminal can view an object through a shield, the position of the mobile terminal is set to be included in the distribution range of the object information. The object information to be distributed to the mobile terminal is thereby appropriately distributed.

Further, in the object distribution range setting device, the map information storage means stores map information represented two-dimensionally, and the distribution range setting means generates a plurality of line segments extending from the located position of the object on the two-dimensional map as an endpoint, with a specified angular interval over 360 degrees around the located position of the object.

In this configuration, because a plurality of correction points are set for each of line segments generated at a specified angular interval over 360 degrees around the object, it is possible to define an appropriate distribution range of object information by the plurality of set correction points.

Further, in the object distribution range setting device, the map information storage means stores map information represented three-dimensionally, and the distribution range setting means virtually sets a sphere centering on the located position of the object and with a radius of a specified length of the line segment and generates a plurality of line segments so that the other endpoints exist with a specified interval all over the sphere.

In this configuration, on a sphere that is set centering on the located position of an object, the other endpoints of a plurality of line segments having one endpoints in the located position of the object are placed, and correction points are set for each of the line segments. Because the distribution range of the object is set based on the correction points, the range where the object is visible is appropriately set as the distribution range of the object information on the map information represented three-dimensionally.

### Advantageous Effects of Invention

It is possible to appropriately distribute object information to be distributed so as to appropriately display an object on the mobile terminal in the AR technology.

### Brief Description of Drawings

Fig. 1 is a diagram showing a device configuration of a system including an object management device.
Fig. 2 is a block diagram showing a functional configuration of an object management device.
Fig. 3 is a hardware block diagram of an object management device.
Fig. 4 is a diagram showing a configuration of an object information storage unit and an example of data stored therein.
Fig. 5 is a diagram showing a configuration of a correction distribution range storage unit and an example of data stored therein.
Fig. 6 is a flowchart showing a process of an object distribution range setting method.
Fig. 7 is a diagram showing an example of setting of an object information distribution range.
Fig. 8 is a flowchart showing a process of an object distribution range setting method according to a second embodiment.
Fig. 9 is a diagram showing an example of setting of an object information distribution range according to the second embodiment.

### Reference Signs List

1...object management device, 1A...object distribution range setting unit, 1B...object distribution unit, 2...mobile terminal, 10...map DB, 11...map information acquisition unit, 12...object information storage unit, 13...object. information acquisition unit, 14...distribution range setting unit, 15... correction distribution range storage unit, 16... distribution request receiving unit, 17...object information extraction unit, 18...object information transmitting unit, A₁,A₂...distribution range, C...distribution range circle, Lₙ...line segment, O...object, Pₙ...distribution correction point, Sₙ...shield

### Description of Embodiments

Embodiments of an object distribution range setting device and an object distribution range setting method according to the present invention are described hereinafter with reference to the drawings. Note that, where possible, the same elements are denoted by the same reference numerals and redundant description thereof is omitted.

### (First embodiment)

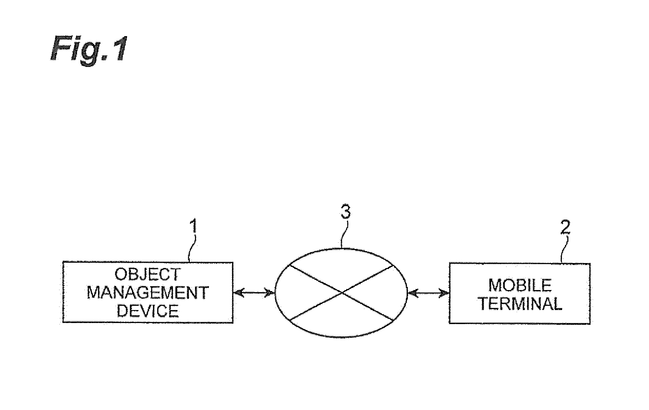

Fig. 1 is a diagram showing a device configuration of a system including an object management device according to this embodiment. As shown in Fig. 1, the system includes an object management device 1 (object distribution range setting device) and a mobile terminal 2, and the object management device 1 and the mobile terminal 2 can communicate with each other over a specified network 3. The mobile terminal 2 is a portable terminal that can perform communication through a mobile communication network, for example. In this case, the specified network 3 is a mobile communication network. Note that the mobile terminal 2 and the network 3 are not limited to be configured as described in the above example, and the mobile terminal 2 may be a terminal device capable of IP communication, for example.

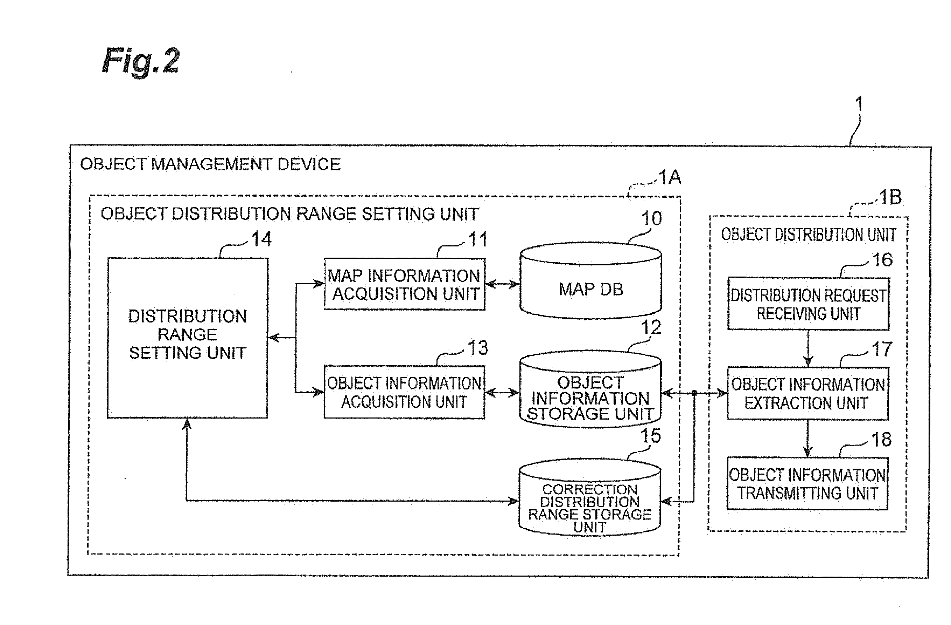

Fig. 2 is a block diagram showing the functional configuration of the object management device 1 according to this embodiment. The object management device 1 according to this embodiment is a device that manages object information about an object placed in the real space or the virtual space, for example, and it extracts object information based on position information transmitted from the mobile terminal 2 and transmits the extracted object information to the mobile terminal 2. The object management device 1 according to this embodiment sets a distribution range of object information to be distributed to the mobile terminal 2 when the position of the mobile terminal 2 corresponds to the distribution range. Note that the mobile terminal 2 that has acquired the mobile terminal 2 displays an object including various information and images superimposed on an image of the real space acquired by an imaging device such as a camera.

As shown in Fig. 2, the object management device 1 includes, as functional components, an object distribution range setting unit 1A and an object distribution unit 1B. In the object management device 1, an object distribution range setting device according to the present invention can be implemented by the functional units included in the object distribution range setting unit 1A. Therefore, the object distribution range setting unit 1A and the object distribution unit 1B may be included in different devices that can communicate with each other.

The object distribution range setting unit 1A includes a map DB 10 (map information storage means), a map information acquisition unit 11 (map information acquisition means), an object information storage unit 12 (object information storage means), an object information acquisition unit 13 (object information acquisition means), a distribution range setting unit 14 (distribution range setting means), and a correction distribution range storage unit 15 (distribution range setting means).

The object distribution unit 1B includes a distribution request receiving unit 16, an object information extraction unit 17, and an object information transmitting unit 18.

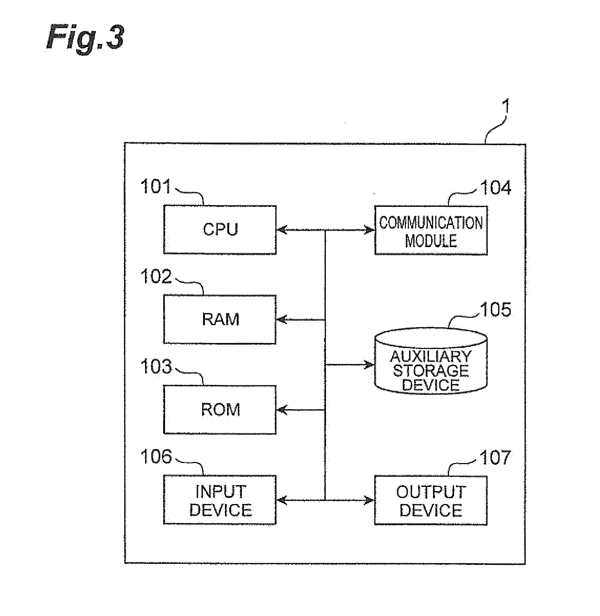

Fig. 3 is a hardware block diagram of the object management device 1. As shown in Fig. 3, the object management device 1 is physically configured as a computer system that includes a CPU 101, a RAM 102 and a ROM 103 which are a main storage device, a communication module 104 which is a data transmitting and receiving device, an auxiliary storage device 105 such as a hard disk or flash memory, an input device 106 such as a keyboard, an output device 107 such as a display and the like. The functions shown in Fig. 2 are implemented by loading given computer software onto hardware such as the CPU 101 or the RAM 102 shown in Fig. 3, making the communication module 104, the input device 106 and the output device 107 operate under control of the CPU 101, and performing reading and writing of data in the RAM 102 or the auxiliary storage device 105. The respective functional units of the object management device 1 are described hereinafter in detail with reference back to Fig. 2.

The map DB 10 is a storage means that stores map information. The map information contains data such as geographic features, road shapes and the position and shape of structures in the real space. Further, the map information contains information about the position and shape of shields that block the line of sight in the real space. An example of the shield is a structure placed in the real space.

The map information acquisition unit 11 is a part that acquires map information from the map DB 10. The map information acquisition unit 11 sends the acquired map information, to the distribution range setting unit 14.

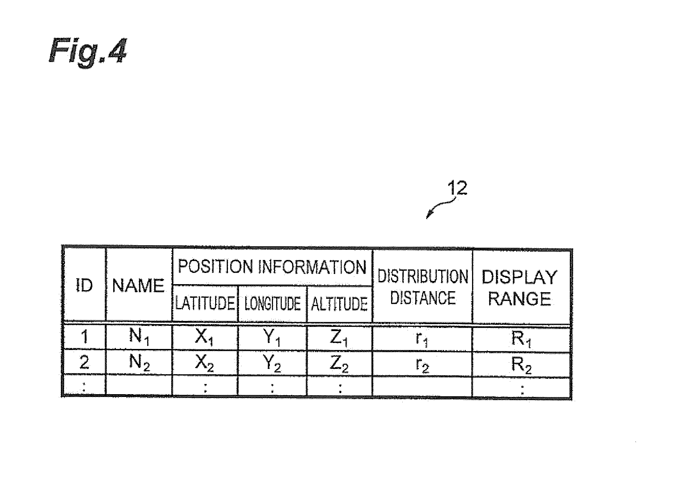

The object information storage unit 12 is a storage means that stores object information, which is information about an object. The object information at least contains position information indicating the located position of an object. Fig. 4 is a diagram showing the configuration of the object information storage unit 12 and an example of data stored therein.

As shown in Fig. 4, the object information storage unit 12 stores name, position information, distribution distance and display range in association with each ID for identifying an object. The name N indicates the name of the object. The position information is information indicating the located position of an object in the real space, and it is represented by longitude X, latitude Y and altitude X, for example. The distribution distance r is information indicating a radius to define a range where the object is distributed by circle (or sphere). The distribution range of an object can be defined as a region within a circle or sphere centering on the located position of the object. The display range R is link information to information about a correction distribution range stored in the correction distribution range storage unit 15. In the correction distribution range storage unit 15, the correction distribution range is defined and stored for each link information indicated in the display range R. Note that the object information may further contain image data when displaying the object on the mobile terminal 2, for example, in addition to the information shown in Fig. 4.

The object information acquisition unit 13 is a part that acquires object information from the object information storage unit 12.

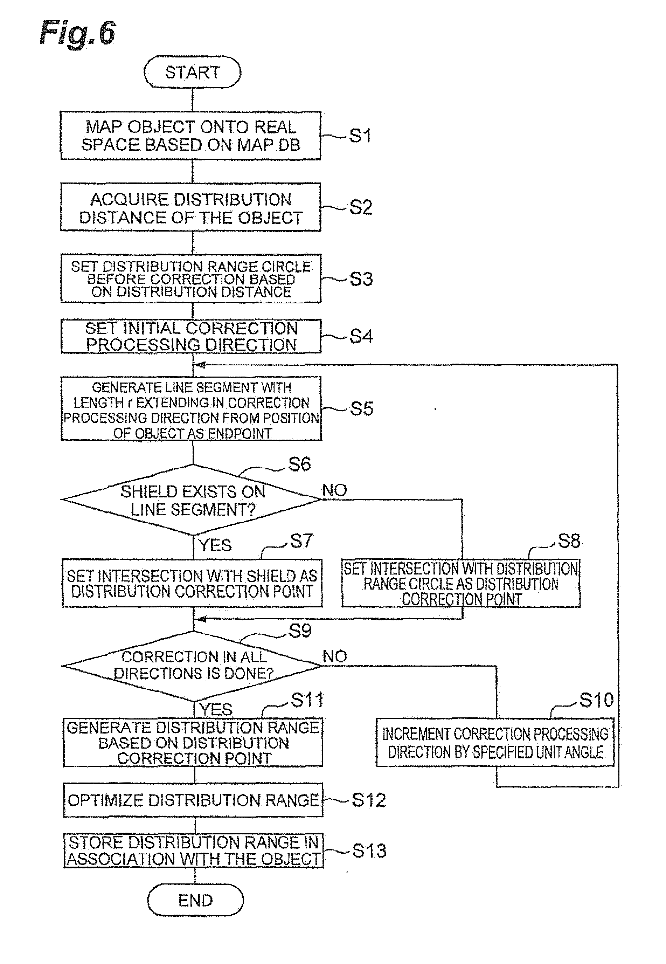

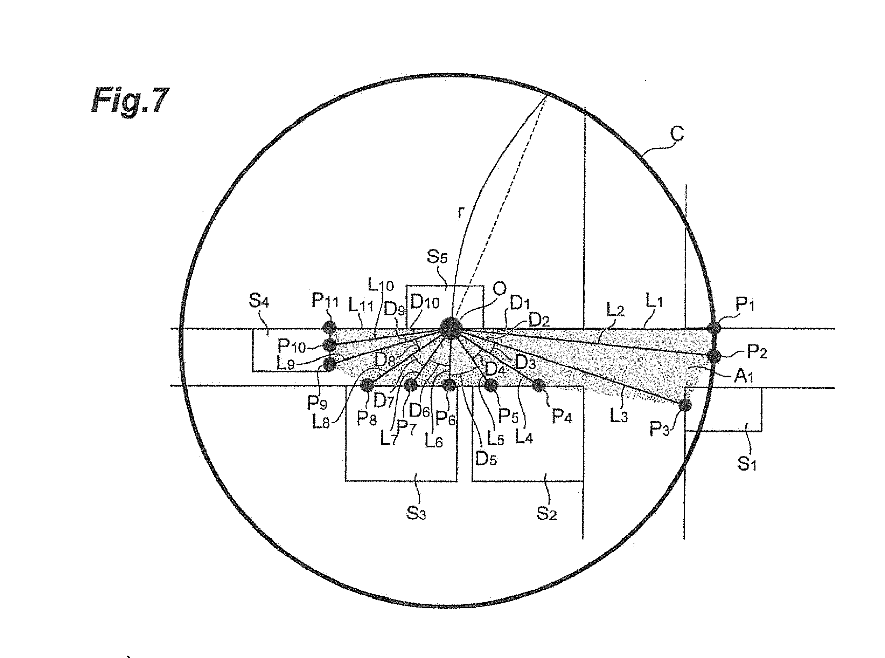

The distribution range setting unit 14 is a part that sets a range in which an object is visible as a distribution range for each object information based on the located position of the object indicated by the object information acquired by the object information acquisition unit 13 and the map information acquired by the map information acquisition unit 11. Specifically, the distribution range setting unit 14 virtually generates a plurality of line segments having a pre-specified length with the located position of the object as an endpoint in the real space defined based on the map information and, when the line segment intersects with a shield in a position within a specified length from the located position of the object, sets the intersection between the line segment and the shield as a correction point and, when the line segment does not intersect with a shield, sets the other endpoint of the line segment as a correction point, and then sets a region defined by a line connecting a plurality of correction points respectively set for the plurality of line segments as a distribution range of the object. The process of setting an object distribution range is described in detail later with reference to Figs. 6 and 7.

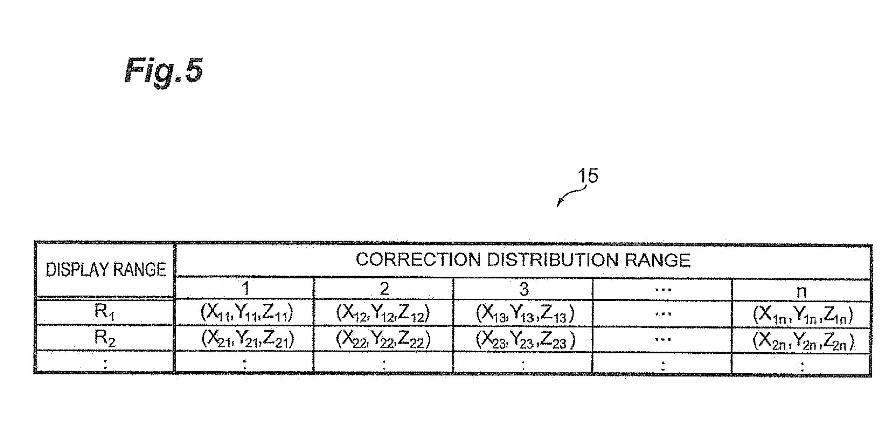

The correction distribution range storage unit 15 is a part that stores the distribution range of an object that has been set by the distribution range setting unit 14. Fig. 5 is a diagram showing the configuration of the correction distribution range storage unit 15 and an example of data stored therein. As shown in Fig. 5, the correction distribution range storage unit 15 stores a correction distribution range for each of the display range R as link information referred to from the object information of the object information storage unit 12. The correction distribution range is stored as a set of a plurality of correction points (X, Y, Z) set by the distribution range setting unit 14. Note that, although the correction points are defined as coordinates in the three-dimensional space in the example of Fig. 5, when the correction points and distribution range are defined on two-dimensional map information, the value of Z-coordinate may be excluded or the value of Z-coordinate may be set "0". Further, the information stored in the correction distribution range storage unit 15 may be stored in the object information storage unit 12, and the correction distribution range storage unit 15 may be excluded from the object management device 1.

The distribution request receiving unit 16 is a part that receives an object distribution request from the mobile terminal 2. The distribution request contains current position information indicating the current position of the mobile terminal 2. The distribution request receiving unit 16 sends the current position information of the mobile terminal 2 to the object information extraction unit 17.

The object information extraction unit 17 is a part that extracts object information to be transmitted to the mobile terminal 2 from the object information storage unit 12. Specifically, the object information extraction unit 17 acquires the correction distribution range stored in association with the display range R in the correction distribution range storage unit 15 based on the display range R stored for each object in the object information storage unit 12. Then, when the current position of the mobile terminal 2 is included in the acquired correction distribution range, the object information extraction unit 17 extracts the object information of the object as a distribution target. The object information extraction unit 17 sends the extracted object information to the object information transmitting unit 18.

The object information transmitting unit 18 is a part that transmits the object information extracted by the object information extraction unit 17 to the mobile terminal 2.

The operation of the object management device 1 in the object distribution range setting method according to this embodiment is described hereinafter with reference to Figs. 6 and 7. Fig. 6 is a flowchart showing a process performed in the object management device 1. Fig. 7 is a diagram showing an example of setting of an object information distribution range. Note that map information represented two dimensionally is used in Fig. 7.

First, prior to the processing of Step S1, the object information acquisition unit 13 and the map information acquisition unit 11 acquire object information and map information, respectively (object information acquisition step, map information acquisition step). Then, the distribution range setting unit 14 sets structures in the real space including roads, shields (structures) and the like based on the map information and maps an object indicated by the object information onto the real space based on the position information of the object (S1). In the example shown in Fig. 7, the object O is located at the side end of the road of a structure S₅.

Next, the distribution range setting unit 14 acquires the distribution distance r from the object information (S2). The distribution range setting unit 14 then sets a distribution range circle C based on the distribution distance r (see Fig. 7) (S3). The distribution range circle C indicates the distribution range of the object information on the assumption that there is no shield. In this embodiment, the distribution range setting unit 14 corrects the distribution range indicated by the distribution range circle C in accordance with the presence of a shield and sets the correction result as the distribution range of the object information.

Then, the distribution range setting unit 14 sets an initial correction processing direction for correction of the distribution range (S4). In Fig. 7, the correction processing direction is set as the rightward direction. The distribution range setting unit 14 then generates a line segment Lₙ with a length r extending in the correction processing direction from the located position of the object as one endpoint (S5). The other endpoint of the line segment Lₙ is located on the circumference of the distribution range circle C.

Then, the distribution range setting unit 14 determines whether a shield Sₙ exists on the line segment Lₙ (S6). When it is determined that the shield Sₙ exists on the line segment Lₙ, the process proceeds to Step S7. On the other hand, when it is not determined that the shield Sₙ exists on the line segment Lₙ, the process proceeds to Step S8. In the example of Fig. 7, because the shield Sₙ does not exist on a line segment L₁, the process proceeds to Step S8. Further, when a line segment L₃ is generated in Step S5 after repeating the processing of Steps S5 to S10, because the shield S₁ exists on the line segment L₃, the process proceeds to Step S7.

In Step S7, the distribution range setting unit 14 sets the intersection between the line segment Lₙ and the shield Sₙ as a distribution correction point (correction point) (S7). In the example of Fig. 7, the distribution correction point P₃ is set at the intersection between the line segment L₃ and the shield S₁.

On the other hand, in Step S8, the distribution range setting unit 14 sets the intersection between the line segment Lₙ and the distribution range circle C as a distribution correction point (correction point) (S8). In the example of Fig. 7, the distribution correction point P₁ is set at the intersection between the line segment L₁ and the distribution range circle C. In other words, the distribution range setting unit 14 sets the other endpoint of the line segment Lₙ as a distribution correction point Pₙ in this case.

In the case of setting the distribution range of the object O on the map representing the real space as a two-dimensional plane, the distribution range setting unit 14 generates a plurality of line segments Lₙ from the located position of the object O on the two-dimensional map as one endpoint, with a specified angular interval D over 360 degrees around the located position of the object, and sets the distribution correction point Pₙ for each of the generated line segments Lₙ. Thus, in Step S9, the distribution range setting unit 14 determines whether correction processing in all directions on the two-dimensional plane is done (S9). When it is determined that correction processing in all directions is done, the process proceeds to Step S11. On the other hand, it is not determined that correction processing in all directions is done, the process proceeds to Step S10.

In Step S10, the distribution range setting unit 14 increments the angle indicating the correction processing direction by a specified angle Dₙ (S10). After that, the process returns to Step S5, and a line segment Lₙ₊₁ is generated, and a correction point Pₙ₊₁ for the line segment Lₙ₊₁ is set. In the example of Fig. 7, a plurality of line segments L₁ to L₁₁ are generated and further a plurality of distribution correction points P₁ to P₁₁ are set by repeating the processing of Steps S5 to S10.

In Step S11, the distribution range setting unit 14 sets a region defined by a line connecting the plurality of distribution correction points Pₙ as a distribution range (S11). In Fig. 7, a region A₁ that is defined by a line connecting the plurality of distribution correction points P₁ to P₁₁ is set as the distribution range of the object information related to the object O. In the following step S12, the distribution range setting unit 14 performs optimization processing of the region A₁ as the distribution range (S12). The optimization processing is processing of smoothing the sharp angle portion of less than a specified angle in the shape of the region A₁, for example. Note that the optimization processing in Step S12 may be skipped. Then, the distribution range setting unit 14 stores the distribution range generated in the processing up to Step S12 in association with the object information into the correction distribution range storage unit 15 (S13). The distribution range is stored as a set of distribution correction points Pₙ that can define the distribution range as shown in Fig. 5. The process of this embodiment thereby ends. Note that the processing of Steps S1 to S13 in this embodiment is an example of a distribution range setting step according to the present invention.

Note that, although an example of setting the distribution range of the object O on the map representing the real space as a two-dimensional plane is shown in Fig. 7, when the map DB 10 stores map information represented three-dimensionally and the object information storage unit 12 has the located position of the object as position information in the three-dimensional space, the distribution range of the object information can be set in the three-dimensional space.

In this case, in Step S3 in the flowchart of Fig. 6, the distribution range setting unit 14 virtually sets a sphere indicating the distribution range centering on the located position of the object and with a radius of the distribution distance r, rather than setting the distribution range circle C. Then, in Step S5, the distribution range setting unit 14 generates a line segment extending from the located position of the object O as one endpoint to a point on the sphere as the other endpoint.

By repeating the processing of Steps S5 to S10, the distribution range setting unit 14 generates a plurality of line segments extending from the located position of the object O as an endpoint, with a specified angular interval in all directions in the three-dimensional space. In other words, the distribution range setting unit 14 generates a plurality of line segments so that the other endpoints exist with a specified interval all over the sphere generated in Step S3.

After that, the distribution range setting unit 14 sets a distribution correction point for each of the generated line segments. By the above process, the distribution range setting unit 14 can set the distribution range of the object information on the map information defined three-dimensionally as a three-dimensional region.

In the object management device 1 and the object distribution range setting method according to the first embodiment described above, a range where an object is visible is set for each object information as a distribution range of object information related to the object by the distribution range setting unit 14 based on the located position of the object and the map information. Consequently, when the mobile terminal 2 is located in the position where an object is visible, the object information of the object is distributed to the mobile terminal 2. It is thereby possible to appropriately distribute object information to be distributed so as to appropriately display the object on the mobile terminal 2.

### (Second embodiment)

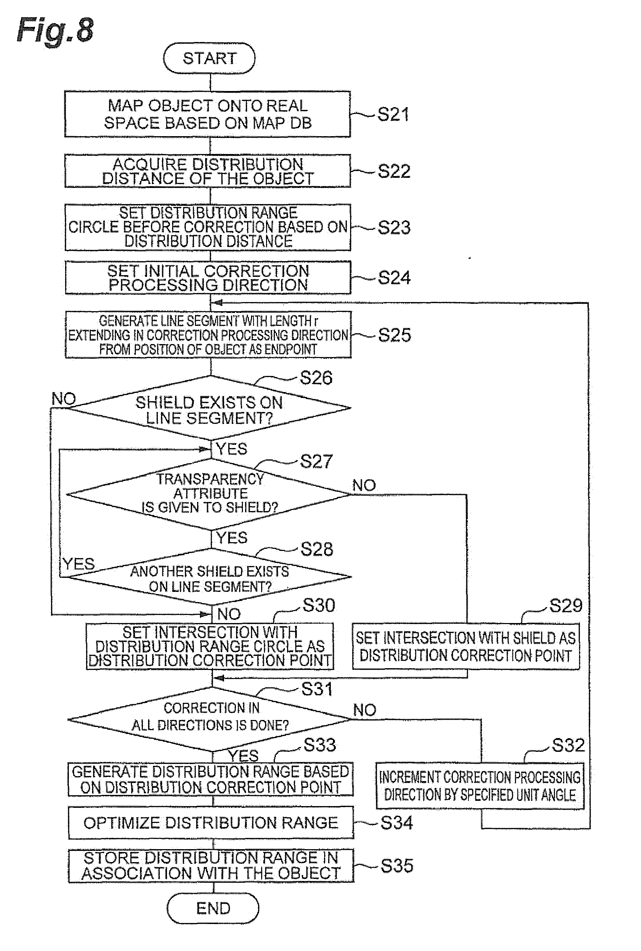

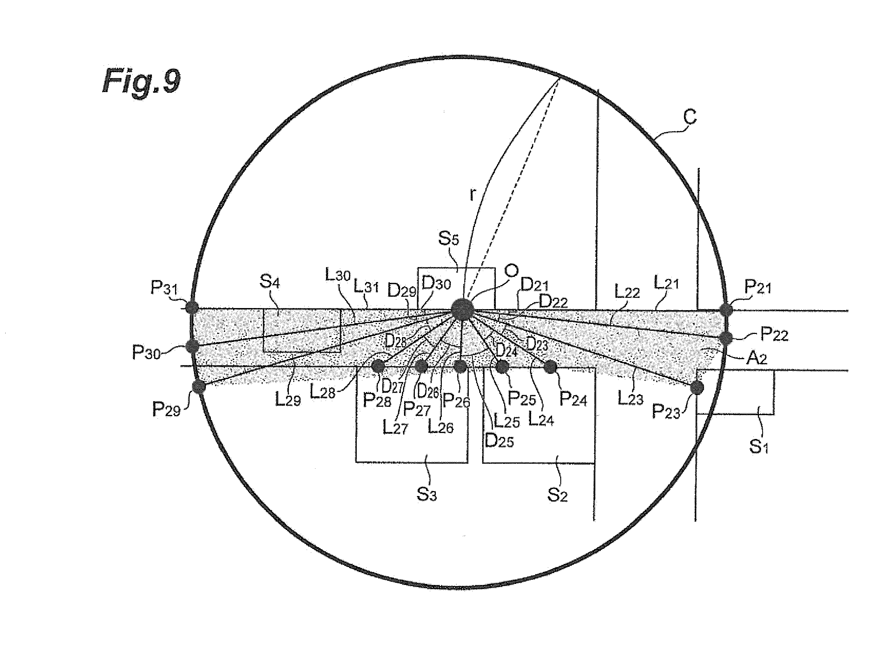

The operation of an object management device 1 according to a second embodiment is described hereinafter with reference to Figs. 8 and 9. Fig. 8 is a flowchart showing a process performed in the object management device 1. Fig. 9 is a diagram showing an example of setting of an object information distribution range according to the second embodiment.

In the second embodiment, when a shield in the map information stored in the map DB 10 is a transparent object, a transparency attribute is stored in association with the shield. Note that, even if the line of sight is blocked by the structure, when a region that is hidden behind the structure when viewed from the reference position of the sight line is visible through the structure, the structure is defined as a transparent object. In the second embodiment, setting of the distribution range of object information is performed in consideration of the presence or absence of a transparency attribute in a shield. The process of setting the distribution range of object information is specifically described with reference to Figs. 8 and 9. Note that it is assumed that a transparency attribute is given to a shield S₂₄ in Fig. 9.

The processing of Steps S21 to S26 in the flowchart of Fig. 8 is the same as the processing of Steps S1 to S6 in the flowchart of Fig. 6, respectively.

In Step S26, when it is determined that the shield Sₙ exists on the line segment Lₙ, the process proceeds to Step S27. On the other hand, when it is not determined that the shield Sₙ exists on the line segment Lₙ, the process proceeds to Step S30.

In the following Step S27, the distribution range setting unit 14 determines whether a transparency attribute is given to the shield Sₙ on the line segment Lₙ (S27). When it is determined that a transparency attribute is given to the shield Sₙ on the line segment Lₙ, the process proceeds to Step S28. On the other hand, when it is not determined that a transparency attribute is given to the shield Sₙ on the line segment Lₙ, the process proceeds to Step S29. In the example of Fig. 9, when a line segment L₂₉ is generated in Step S25 after repeating the processing of Steps S25 to S30, because a transparency attribute is given to the shield S₂₄ on the line segment L₂₉, the process proceeds to Step S28.

In Step S28, the distribution range setting unit 14 determines whether another shield different from the shield on which determination has been made in Step S26 exists on the line segment Lₙ (S28). When it is not determined that another shield exists on the line segment Lₙ, the process returns to Step S27, and the presence or absence of a transparency attribute of the another shield is determined. On the other hand, when it is not determined that another shield exists on the line segment Lₙ, the process proceeds to Step S30.

The processing of Steps S29 and S30 is the same as the processing of Steps S7 and S8 in the flowchart of Fig. 6. As shown in Fig. 9, even when the shield S₂₄ exists on the line segment L₂₉, because a transparency attribute is given to the shield S₂₄, the distribution range setting unit 14 sets a distribution correction point P₂₉ at the intersection between the line segment L₂₉ and the distribution range circle C. In other words,the distribution range setting unit 14 sets the other endpoint of the line segment L₂₉ as the distribution correction point P₂₉ in this case.

The processing of Steps S31 and S35 is the same as the processing of Steps S9 and S13 in the flowchart of Fig. 6, respectively. Note that, in Step S33, the distribution range setting unit 14 sets a region A₂ that is defined by a line connecting a plurality of distribution correction points P₂₁ to P₃₁ as the distribution range of the object information related to the object O.

As described above, when it is determined in Step S27 that a transparency attribute is given to a shield, even when the shield exists on a line segment, the setting of a distribution correction point (S30) and the determination on the presence or absence of another shield (S28) are performed, assuming that the shield does not exist. Accordingly, when the mobile terminal 2 can view an object through a shield, the position of the mobile terminal 2 is set to be included in the distribution range of the object information. The object information to be distributed to the mobile terminal 2 is thereby appropriately distributed.

The embodiments of the present invention are described in detail above. However, the present invention is not restricted to the above-described embodiments, and various changes and modifications may be made without departing from the scope of the invention.

For example, when the object information extracted by the object information extraction unit 17 is transmitted to the mobile terminal 2 by the object information transmitting unit 18, information about the distribution range of the object stored in the correction distribution range storage unit 15 may be also transmitted. In this case, the mobile terminal 2 can use the information about the distribution range of the object for determination as to whether or not to display the object in an image of the real space. To be more specific, the mobile terminal 2 stores the distributed object information and information about the distribution range for a certain period of time. Then, when the mobile terminal 2 moves back to the distribution range of the object after it has moved to a position where the object is invisible, the mobile terminal 2 can make determination to display the object. It is thereby possible to speed up the display of the object in the mobile terminal 2. Further, because the information about the distribution range of the object is information that is set in consideration of the visibility of the object based on the distance from the object and the presence of a shield, the mobile terminal 2 does not need to make determination about the visibility of the object at the time of making determination as to whether or not to display the object.

### Industrial Applicability

According to the present invention, it is possible to appropriately distribute object information to be distributed so as to appropriately display an object on a mobile terminal in the AR technology.

## Claims

1. An object distribution range setting device for setting a distribution range in object information to be distributed to a mobile terminal when a position of the mobile terminal corresponds to the distribution range, comprising:
an object information storage means for storing the object information containing information about a located position of an object;
a map information storage means for storing map information containing information about a position and shape of a shield blocking a line of sight in a real space;
an object information acquisition means for acquiring the object information from the object information storage means;
a map information acquisition means for acquiring the map information from the map information storage means; and
a distribution range setting means for setting a range where the object is visible as the distribution range for each of the object information based on the located position of the object indicated by the object information acquired by the object information acquisition means and the map information acquired by the map information acquisition means.

2. The object distribution range setting device according to Claim 1, wherein
the distribution range setting means virtually generates a plurality of line segments having a specified length with the located position of the object as an endpoint in a real space defined based on the map information and, when the line segment intersects with the shield in a position within the specified length from the located position of the object, sets an intersection between the line segment and the shield as a correction point and, when the line segment does not intersect with the shield, sets another endpoint of the line segment as a correction point, and then sets a region defined by a line connecting a plurality of correction points respectively set for the plurality of line segments as the distribution range.

3. The object distribution range setting device according to Claim 2, wherein
the map information storage means stores a transparency attribute in association with the shield when the shield is a transparent object, and
even if the line segment intersects with the shield, when the transparency attribute is associated with the shield, the distribution range setting means sets the correction point assuming that the shield does not exist.

4. The object distribution range setting device according to Claim 2 or 3, wherein
the map information storage means stores map information represented two-dimensionally, and
the distribution range setting means generates a plurality of line segments extending from the located position of the object on the two-dimensional map as an endpoint, with a specified angular interval over 360 degrees around the located position of the object.

5. The object distribution range setting device according to Claim 2 or 3, wherein
the map information storage means stores map information represented three-dimensionally, and
the distribution range setting means virtually sets a sphere centering on the located position of the object and with a radius of a specified length of the line segment and generates a plurality of line segments so that the other endpoints exist with a specified interval all over the sphere.

6. An object distribution range setting method in an object distribution range setting device for setting a distribution range in object information to be distributed to a mobile terminal when a position of the mobile terminal corresponds to the distribution range, the method comprising:
an object information acquisition step of acquiring the object information from an object information storage means storing the object information containing information about a located position of an object;
a map information acquisition step of acquiring the map information from a map information storage means storing map information containing information about a position and shape of a shield blocking a line of sight in a real space; and
a distribution range setting step of setting a range where the object is visible as the distribution range for each of the object information based on the located position of the object indicated by the object information acquired in the object information acquisition step and the map information acquired in the map information acquisition step.
